# EUROPÄISCHE PATENTANMELDUNG

(11) **EP 1 260 301 A2**
(43) Veröffentlichungstag der Anmeldung: **27.11.2002**
(21) Anmeldenummer: 02291108.5
(22) Anmeldetag: 02.05.2002
(51) Int. Cl.: B23K 9/16

(54) **Verfahren zur Herstellung einer Schweissverbindung**

(30) Priorität: 26.05.2001 DE 10125830
(71) Anmelder: Nexans, 75008 Paris (FR)
(72) Erfinder: Meyer, Michael, 30938 Burgwedel (DE); Frohne, Christian, Dipl.-Ing., 30657 Hannover (DE); Harten, Friedrich, Dipl.-Ing., 31655 Stadthagen (DE)
(74) Vertreter: Döring, Roger, Dipl.-Ing.

(57) **Zusammenfassung**

Bei einem Verfahren zur Herstellung einer Schweißverbindung zwischen den Enden zweier Metallbänder, bei welchem die Stoß an Stoß liegenden Enden mittels eines quer zur Längsrichtung der Metallbänder verfahrbaren WIG Schweißbrenner miteinander verbunden werden, wird an die Längsseiten der Metallbänder im Bereich des Stoßes jeweils ein Blechstück angelegt, beide Blechstücke werden mit einem Schweißpunkt des WIG Schweißbrenners an die Längskanten der Metallbänder im Stoßbereich angeheftet, durch Verfahren des Schweißbrenner entlang der Stoßkante werden die Bandenden miteinander verschweißt, wobei der Schweißbrenner auf einem der Blechstücke gezündet wird und bis zu dem gegenüberliegenden Metallblech verfahren wird und beide Metallbleche werden von den Längsseiten entfernt.

## Beschreibung

Gegenstand der Erfindung ist ein Verfahren zur Herstellung einer Schweißverbindung zwischen den Enden zweier Metallbänder nach dem Oberbegriff des Anspruchs 1 sowie die Anwendung des Verfahrens für die Herstellung längsnahtgeschweißter Rohre.

Bei der kontinuierlichen Herstellung längsnahtgeschweißter Rohre wird ein Metallband von einer Vorratsspule abgezogen, ggfs einer Reinigung unterzogen, an seinen Bandkanten besäumt zu einem Schlitzrohr geformt und längsnahtverschweißt. Die auf diese Weise herstellbare Länge ist begrenzt durch die Länge des auf der Vorratsspule befindlichen Metallbandes. Andererseits ist die Länge des Metallrohres begrenzt durch das Fassungsvermögen der Trommel, auf welche das Metallrohr aufgespult wird.

Ist die Länge des auf der Vorratsspule befindlichen Metallbandes vom Fassungsvermögen der Trommel unterschiedlich, kommt es zwangsläufig zu Kurzlängen des Metallrohres oder zu größeren Abfallängen des Metallbandes.

Man hat deshalb in einer kontinuierlichen Rohrfertigungsanlage das Ende des in der Fertigungsanlage befindlichen Metallbandes mit dem Anfangsende eines folgenden Metallbandes durch eine Quernahtschweißung verbunden. Ein sogenannter Bandspeicher nimmt dabei einen ausreichenden Bandvorrat auf, damit die Fertigung nicht unterbrochen werden muß.

Die Quernaht wurde entweder mit einer Laserschweißung erzeugt oder mit einem unter Schutzgas arbeitendem Lichtbogen. Eine Laserschweißanlage ist wesentlich teurer als eine Lichtbogenschweißanlage. Darüberhinaus ist eine Laserschweißung für stark reflektierende Metalle wie z. B. Kupfer problematisch.

Bei der Herstellung einer Quernahtschweißung mit einem Lichtbogenschweißbrenner tritt das Problem auf, daß am Anfang und am Ende der Schweißnaht Einbrandlöcher in den Bandkanten entstehen können. Dieses Problem tritt besonders bei Schweißnähten auf, die unter einem Winkel von 30° bis 45° zur Längsrichtung des Metallbandes verlaufen, da die auf das spitz zugeschnittene Blech einwirkende Wärme so groß wird, daß das Metall wegschmilzt.

Man hat versucht dieses Problem dadurch zu lösen, daß man mit einem Zusatzdraht arbeitet oder aber die Kante eines Metallbandes abkantet und die Kante als Zusatzmaterial verwendet. Nachteilig hierbei ist jedoch, daß die Schweißnaht bearbeitet werden muß.

Eine andere Lösung besteht darin, daß das Metallband an seinen Längskanten breiter besäumt wird, was zu einem erhöhten Abfall an Bandmaterial führt. (Internationale Uniwema-Lizenznehmentagung der Kabel- und Metallwerke Gutehoffnungshütte AG in Hannover, 16. bis 17. November 1967)

Der vorliegenden Erfindung liegt die Aufgabe zugrunde, ein Verfahren zur Herstellung einer Quernahtschweißung bereitzustellen, durch welches die Nachteile der bekannten Verfahren überwunden werden.

Diese Aufgabe wird in überraschend einfacher Weise durch die im Anspruch 1 aufgeführten kennzeichnenden Merkmale gelöst.

Der wesentliche Vorteil der Erfindung ist darin zu sehen, daß durch das Anheften der Blechstücke die für das Lichtbogenschweißen nachteiligen Luftspalte zwischen den Metallbändern und den Blechstücken vermieden werden und somit Brandlöcher nicht mehr auftreten. Das neue Verfahren arbeitet wesentlich schneller als die bisher eingesetzten Verfahren.

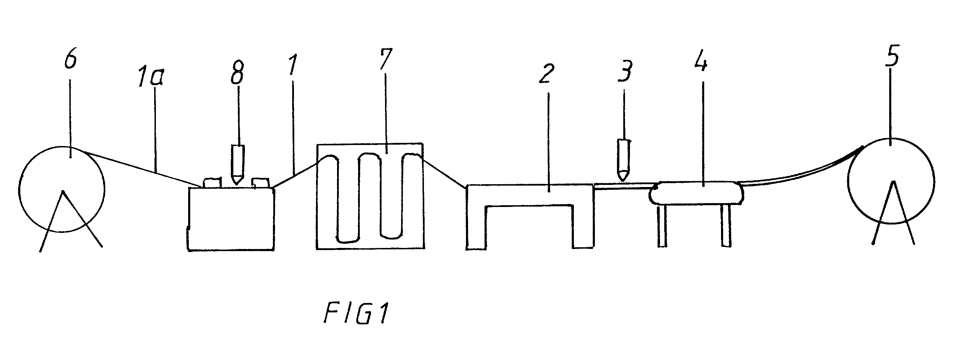

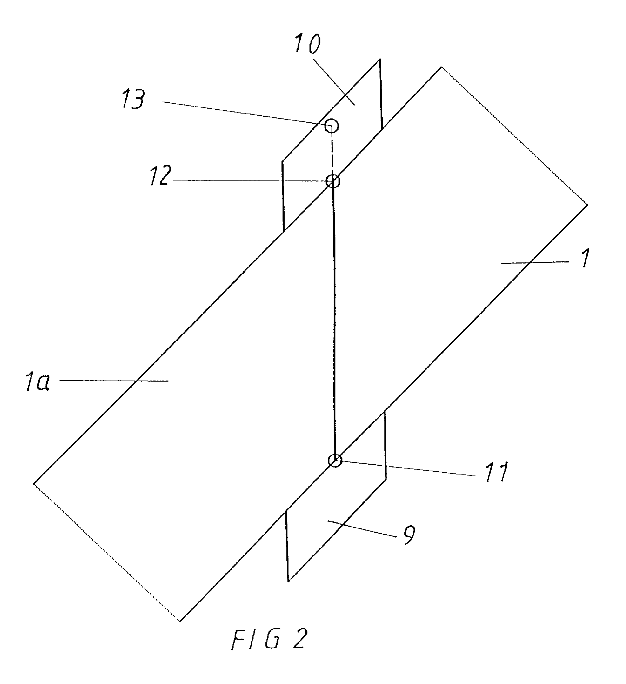

Die Erfindung ist anhand der in den Figuren 1 und 2 schematisch dargestellten Ausführungsbeispiele näher erläutert.

In der Figur 1 ist eine seitliche Ansicht einer Rohrfertigungsanlage dargestellt.

Mit 1 ist ein Metallband z. B. mit einer Wanddicke von 0,3 mm und einer Breite von 30 mm bezeichnet, welches in einer Rohrformeinrichtung 2 zum Schlitzrohr geformt wird. Der Längsschlitz des zum Rohr geformten Metallbandes 1 wird mittels einer Lichtbogenschweißeinrichtung 3 verschweißt. Das geschweißte Rohr wird von einer Abzugsvorrichtung 4 gefaßt, welche das geschweißte Rohr einer Aufwickelvorrichtung 5 zuführt.

Damit auf einer solchen Anlage Rohre nahezu ohne Unterbrechung gefertigt werden können, wird das Anfangsende eines neuen Bandvorrates 6 an das Ende des in der Fertigung befindlichen Metallbandes 1 angeschweißt. Hierzu wird ein ausreichender Bandvorrat des Metallbandes 1 in einen Bandspeicher 7 eingefahren, dann das Ende des Metallbandes 1 eingespannt und mittels einer nicht dargestellten Schneidvorrichtung abgetrennt. Der Anfang des neuen Metallbandes 1a wird ebenfalls abgetrennt, so daß beide Enden aneinanderstoßen. Der Schnitt der Bandenden verläuft vorzugsweise unter einem Winkel von 45° zur Längsachse des Metallbandes 1. Dadurch wird die Zugbelastbarkeit der geschweißten Quernaht erhöht.

Mit einem Lichtbogenschweißbrenner 8 wird die Quernaht verschweißt.

Anhand der Figur 2 sollen die Vorarbeiten und der eigentliche Schweißvorgang näher erläutert werden. Nachdem die Enden der Metallbänder 1 und 1a unter einem Winkel von ca 45° zur Längsachse durchtrennt wurden, werden Blechstücke 9 und 10 dicht an die Längskanten der Metallbänder 1 und 1a im Bereich ihrer Stoßkante angelegt. Die Blechstücke 9 und 10 bestehen aus demselben Material wie die Metallbleche 1 und 1a. Sodann werden die Blechstücke 9 und 10 mit Hilfe eines nicht dargestellten in Figur 1 mit 8 bezeichneten Lichtbogenschweißbrenners an den Stellen 11 und 12 angeheftet. Der Schweißbrenner 8 wird dann bis an die Stelle 13 verfahren, dort gezündet und über die Punkte 12 und 11 bis auf das Metallstück 9 verfahren, wobei eine Schweißnaht zwischen den Metallbändern 1 und 1a erzeugt wird. Abschließend werden die Blechstücke 9 und 10 durch Biegen von den Metallblechen 1 und 1a entfernt.

Nun können die Spannvorrichtungen gelöst werden und nach einem Entleeren des Speichers 7 kann das neue Metallband 1a in die Anlage eingezogen werden.

## Patentansprüche

1. Verfahren zur Herstellung einer Schweißverbindung zwischen den Enden zweier Metallbänder, bei welchem die Stoß an Stoß liegenden Enden mittels eines quer zur Längsrichtung der Metallbänder verfahrbaren WIG Schweißbrenner miteinander verbunden werden **gekennzeichnet durch** folgende Merkmale:
a) an die Längsseiten der Metallbänder wird im Bereich des Stoßes jeweils ein Blechstück angelegt
b) beide Blechstücke werden mit einem Schweißpunkt des WIG Schweißbrenners an die Längskanten der Metallbänder im Stoßbereich angeheftet
c) **durch** Verfahren des Schweißbrenner entlang der Stoßkante werden die Bandenden miteinander verschweißt, wobei der Schweißbrenner auf einem der Blechstücke gezündet wird und bis zu dem gegenüberliegenden Metallblech verfahren wird und
d) beide Metallbleche von den Längsseiten entfernt werden.

2. Verfahren nach Anspruch 1, **dadurch gekennzeichnet, daß** die Enden der Metallbänder unter einem Winkel zwischen 15 und 45° zur Längsachse der Metallbänder verschweißt werden.

3. Verfahren nach Anspruch 1 oder 2, **dadurch gekennzeichnet, daß** die Metallbleche aus dem gleichen Material wie die Metallbänder bestehen.

4. Anwendung des Verfahrens nach einem der Ansprüche 1 bis 3 bei der Herstellung längsnahtgeschweißter Metallrohre, wobei die Verbindung der Enden der Metallbänder im Tandem mit dem Rohrform- und Längsnahtschweißvorgang vorgenommen wird.

5. Anwendung nach Anspruch 4, wobei das Metallband zwischen dem Verschweißen der Bandenden und dem Rohrfertigungsprozeß in einem Bandspeicher gespeichert wird.
